# EUROPÄISCHE PATENTSCHRIFT

(11) **EP 1 476 344 B1**
(45) Veröffentlichungstag und Bekanntmachung des Hinweises auf die Patenterteilung: **15.07.2009**
(21) Anmeldenummer: 03742494.2
(22) Anmeldetag: 20.02.2003
(51) Int. Cl.: B62B 3/06

(54) **GABELHUBWAGEN**
PALLET TRUCK
TRANSPALETTE

(30) Priorität: 20.02.2002 DE 20202592 U; 12.09.2002 DE 20214152 U
(43) Veröffentlichungstag der Anmeldung: 17.11.2004
(73) Patentinhaber: Borrmann GmbH, 47574 Goch-Nierswalde (DE)
(72) Erfinder: BORRMANN, Hans-Peter, 47574 Goch-Nierswalde (DE)
(74) Vertreter: Bergmann, Michael
(86) Internationale Anmeldenummer: PCT/DE2003/000534
(87) Internationale Veröffentlichungsnummer: WO 2003/070538

(56) Entgegenhaltungen:
- EP-A- 0 978 437
- WO-A-00/68059
- GB-A- 2 087 345
- US-A- 3 188 107
- US-A- 3 701 211
- US-A- 3 982 767
- US-A- 4 895 042
- US-A1- 2002 190 489

## Beschreibung

Die Erfindung richtet sich auf einen Gabelhubwagen umfassend ein Trägergestell mit zwei mit Abstand zueinander angeordnete Tragbalken und mit Führungsrollen und ein starr damit verbundenes Haltegestell sowie eine damit drehbeweglich und lösbar verbundene, auf der Achse zweier Räder gelagerte Hubeinrichtung, wobei das Haltegestell eine mit einer Gelenkpfanne auf einem Kopf einer Kolbenstange der Hubeinrichtung lösbare gehaltenen Lagerbalken aufweist und an den Tragbalken je ein Kniehebel gelenkig gelagert ist, die an gegenüberliegenden Seiten einer Traverse oder Konsole der Hubeinrichtung drehbeweglich und lösbare befestigt sind, wobei die Hubeinrichtung eine Hubpumpe aufweist, die auf einer Konsole angeordnet ist und die die Kolbenstange mit einer Einschnürung aufweist, deren Kopf aus dem Gehäuse der Hubpumpe nach oben heraus ragt.

Üblicherweise sind bei derartigen aus einer Hubeinrichtung und einem Trägergestell bestehenden Gabelhubwagen bzw. Handgabelhubwagen die Hubeinrichtung und das Trägergestell beweglich und untrennbar miteinander verbunden. Dadurch ist der Handgabelhubwagen schwer an Gewicht und unhandlich. Er ist nur von mindestens zwei Personen zu tragen oder zu heben. Dabei setzen sich beide Personen auch erheblichen Unfallgefahren aus. Das bedeutet, dass der Handgabelhubwagen von nur einer Person weder eine Treppe hoch getragen noch eine Treppe hinunter getragen werden kann, so dass eine auf dem Handgabelhubwagen befindliche Palette nicht mit dem Handgabelhubwagen an die gewünschte Stelle gebracht werden kann, wenn Höhenunterschiede überwunden werden müssen. Bei einem Handgabelhubwagen als Flurfahrzeug sind derartige Bewegungen im Allgemeinen nicht erforderlich. In Sonderfällen jedoch führt das zu erheblichen Schwierigkeiten, weil der Gabelhubwagen stabil und somit schwer an Gewicht ist. Für ein Flurfahrzeug ist die Höhe des Gewichtes weitgehend ohne Bedeutung, weil es auf nur einer einzigen Ebene gefahren wird, also nicht auf Ebenen unterschiedlichen Niveaus.

Ein gattungsgemäßer Gabelhubwagen, der in ein Trägergestell und eine Hubeinrichtung zerlegbar ist und der dann ohne weiteres von einer einzigen Person getragen werden kann, wenn Höhenunterschiede zu überwinden sind, ist aus der WO 00/68059 A1 bekannt. Bei dieser Vorrichtung liegt eine in einem Lagerbalken des Haltegestells angeordnete Gelenkpfanne ungesichert auf einem Kolbestangenkopf der Hubeinrichtung auf und sind die Kniehebel mittels sonst nicht weiter gesicherter Bolzen an einer Traverse der Hubeinrichtung befestigt. Nachteilig bei diesem Stand der Technik ist es, dass die Steckbolzen ungesichert sind und insbesondere bei längerem Betrieb des Gabelhubwagens oder bei unsachgemäßer Anordnung an der Hubeinrichtung sich von der Hubeinrichtung lösen können. In diesem Fall löst sich dann aber auch das Trägergestell von der Hubeinrichtung und der Gabelhubwagen zerlegt sich in zwei Einzelteile.

Der Erfindung liegt die Aufgabe zugrunde, bei einem gattungsgemäßen Gabelhubwagen eine lösbare Verbindung zwischen der Hubeinrichtung und dem Haltegestell des Gabelhubwagens zu schaffen.

Bei einem Gabelhubwagen der Eingangs bezeichneten Art wird diese Aufgaben erfindungsgemäß dadurch gelöst, dass die zwei Kniehebel jeweils am vorderen Ende eine nach vorn offene Lageraufnahme zur Aufnahme eines Aufnahmezapfens aufweisen und jeweils mit der an ihrem vorderen Ende die an der Konsole oder Traverse angeordneten Aufnahmezapfen oder - bolzen aufnehmenden, nach vorne offenen Lageraufnahme an der Hubeinrichtung befestigt sind, wobei die Lageraufnahmen jeweils mittels eines an dem jeweiligen Kniehebel schwenkbar angeordneten und in der Schließstellung den Aufnahmezapfen oder-bolzen umschließenden Bügels derart öffenbar verschließbar sind, dass der jeweilige Aufnahmezapfen oder - bolzen fest zwischen der jeweiligen Lageraufnahme und dem jeweiligen Bügel angeordnet ist, und dass ein in die Einschnürung der Kolbenstange eingreifender, senkrecht zur Kolbenstange wirkender federbelasteter Schnäpper in dem Haltegestell in Höhe des Kolbenstangenkopfes angeordnet ist, der mit der Einschnürung des Kolbenstangenkopfes in und außer Eingriff zu bringen ist.

Auf diese Weise gelangt man zu einem Gabelhubwagen, der die vorerwähnte Aufgabe voll erfüllt. Die aufklappbaren Bügel sind durch Verschwenken in eine die Lageröffnungen öffnende Offenstellung bewegbar. Eine drehbare, aber feste sowie lösbare Verbindung zwischen der Kolbenstange und dem Lagerbalken und somit zwischen dem Haltegestell und der Hubeinrichtung ist gewährleistet durch einen in eine Einschnürung der Kolbenstange eingreifenden Schnäpper. Zweckmäßig ist der Gabelhubwagen somit so ausgebildet, dass in dem Haltegestell in Höhe des Kolbenstangenkopfes ein senkrecht zur Kolbenstangenachse bzw. horizontal wirkender federbelasteter Schnäpper vorgesehen ist, der mit einer Einschnürung des Kolbenstangenkopfes in und außer Eingriff zu bringen ist. Der Gabelhubwagen ist somit so ausgebildet, dass an den Tragbalken je ein Kniehebel gelenkig gelagert ist, von denen jeder am vorderen Ende eine nach vorn offene Lageraufnahme zur Aufnahme eines Aufnahmezapfens aufweist.

Außerdem ist im vorderen Bereich des Kniehebels ein Haltebügel schwenkbeweglich angeordnet, der über die Lageraufnahme zu schwenken ist.

Dadurch besteht die Möglichkeit, dass die Hubeinrichtung und das Trägergestell mit drei Handgriffen sehr schnell voneinander gelöst werden können, so dass zwei Teile vorliegen, nämlich einerseits die Hubeinrichtung und andererseits das Trägergestell. Die Hubeinrichtung allein ist ohne weiteres von einer Ebene über eine Treppe auf eine andere Ebene zu tragen, des gleichen auch das Trägergestell. Der Gabelhubwagen ist dadurch in zwei etwa gleich schwere Teile zerlegbar, wobei die zerlegten Teile zu dem Gabelhubwagen wieder zusammensetzbar sind. Hierdurch kann im Bedarfsfalle ohne weiteres der Gabelhubwagen in die Hubeinrichtung und das Trägergestell zerlegt werden, so dass anschließend die Hubeinrichtung von einer einzigen Person an eine andere Stelle sowie auch das Trägergestell von der gleichen Person an die gleiche andere Stelle gebracht werden kann, wobei die Hubeinrichtung und das Trägergestell wieder ohne weiteres zu dem Gabelhubwagen zusammenzusetzen sind. Beide Teile, nämlich die Hubeinrichtung und das Trägergestell können, nachdem sie an einen anderen Ort gebracht worden sind, wieder durch drei einfache Handgriffe und damit sehr schnell miteinander verbunden werden.

Des Weiteren liegt der Vorteil der Zweiteilbarkeit des Handgabelhubwagens darin, dass der Handgabelhubwagen, wenn er in seine beiden Teile zerlegt ist, leicht in einen Kombi, PKW, Kleinlastwagen oder LKW von nur einer einzigen Person gehoben und verstaut werden kann.

Die Montage bzw. Demontage des Hubwagens erfolgt ohne Werkzeug und es müssen keine Einzelteile aufbewahrt werden, die eventuell verloren gehen könnten. Die Montage sowie die Demontage erfolgen durch eine einzige Person in einer kurzen Zeit von nur wenigen Sekunde. Im geschlossenen Zustand der Bügel sind die Aufnahmezapfen oder Aufnahmebolzen fest zwischen der jeweiligen Lageröffnung des jeweiligen Kniehebels und dem jeweiligen Bügel angeordnet. Im geschlossenen Zustand der Bügel sind die Hubeinrichtung und das Haltegestell des Gabelhubwagens somit drehbeweglich, aber fest miteinander verbunden.

Hierbei kann gemäß Weiterbildung der Erfindung der Schnäpper horizontal beweglich in zwei an dem Haltearm angeordneten Lagern längsverschieblich gelagert sein.

Auch sieht die Erfindung vor, dass der Schnäpper gegen den Druck einer Feder außer Eingriff mit der Einschnürung bringbar ist.

Ausgestaltungen und Weiterbildungen der Erfindung ergeben sich weiterhin aus den Unteransprüchen.

Hier kann vorgesehen sein, dass an der Konsole oder Traverse an deren beiden Seiten je ein horizontal ausgerichteter Aufnahmezapfen angeordnet ist.

Die Zeichnung zeigt beispielhaft ein Ausführungsbeispiel eines erfindungsgemäß ausgebildeten Gabelhubwagens. Es zeigt
- Figur 1: eine Seitenansicht auf einen erfindungsgemäß ausgebildeten Gabelhubwagen teilweise im Schnitt,
- Figur 2: eine Vorderansicht auf den Gabelhubwagen gemäß Figur 1,
- Figur 3: eine Draufsicht auf den Gabelhubwagen gemäß Figur 1,
- Figur 4: eine Darstellung entsprechend Figur 1, allerdings getrennt in Hubeinrichtung und Trägergestell,
- Figur 5: eine Vergrößerung des Teiles V der Figur 1,
- Figur 6: eine Vergrößerung des Teiles VI der Figur 4,
- Figur 7a: eine Vergrößerung des Teiles VII der Figur 5 im geschlossenen Zustand,
- Figur 7b: eine Vergrößerung des Teiles VII der Figur 5 im geöffneten Zustand,
- Figur 8: eine Vergrößerung des Teiles VIII der Figur 5,
- Figur 9a: eine Darstellung eines Kniehebels in geöffnetem Zustand,
- Figur 9b: eine Darstellung eines Kniehebels in geschlossenem Zustand und
- Figur 10: eine vergrößerte Darstellung der Figur 3.

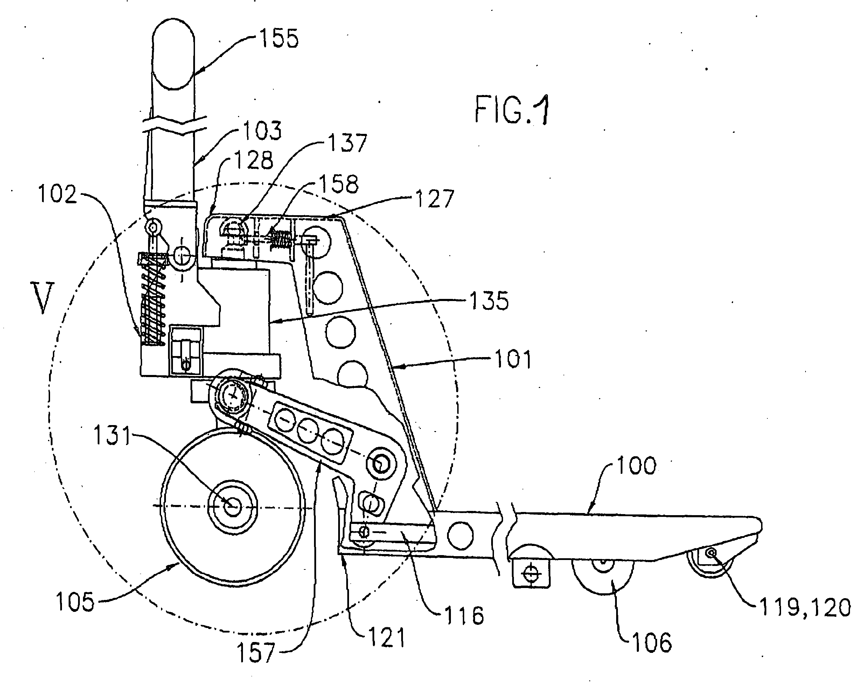

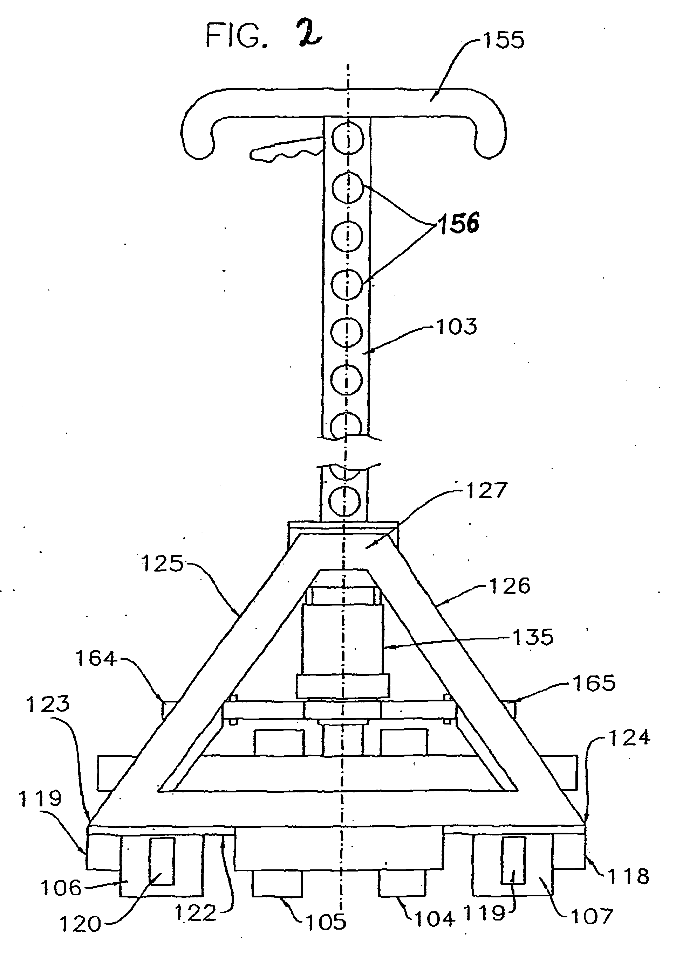

Der in den Figuren 1 bis 10 dargestellte und erfindungsgemäß ausgebildete Gabelhubwagen hat ein Trägergestell 100 mit einem starr damit verbundenen Haltegestell 101, die beweglich mit einer Hubeinrichtung 102 verbunden sind, an der eine Stange 103 angeordnet ist. Der Gabelhubwagen ist auf zwei vorderen Rädern 104, 105 und zwei rückwärtigen Rollen 106, 107 fahrbar gelagert, wenn er beladen ist. Im unbeladenen Zustand ist er auf Führungsrollen 119, 120 gelagert, wenn die rückwärtigen Rollen 106, 107 hochgehoben sind.

Das Trägergestell 100 hat zwei mit Abstand zueinander angeordnete Tragbalken 108, 109, in denen Öffnungen 110, 111, 112, 113, 114, 115 zur Gewichtsersparnis eingearbeitet sind.

Die rückwärtigen Rollen 106, 107 sind über Hubstangen 116, 117 und ein Verstellgetriebe 118 in der Höhe verstellbar, so dass die rückwärtigen Rollen 106, 107 in unbelastetem Zustand des Trägergestells 100 hochgezogen sind und das Trägergestell 100 auf den Führungsrollen 119, 120 gelagert ist.

Am vorderen Ende 121 des Trägergestells 100 ist an den Tragbalken 108, 109 ein Querbalken 122 vorgesehen, an dessen beiden Enden 123, 124 je ein schräg nach oben innen gerichteter Balken 125, 126 befestigt ist, wobei beide Balken 125, 126 oben in einen horizontal verlaufenden Lagerbalken 127 mit einer Gelenkpfanne am vorderen Ende 128 münden. In den Trägerbalken 108, 109 und in den Balken 125, 126 sind Öffnungen 129, 130 zur Gewichtserleichterung vorgesehen.

Auf der Achse 131 der Räder 104, 105 ist eine Stütze 132 vorgesehen, auf der eine Traverse 133 angeordnet ist, auf welcher (133) eine Konsole 134 angeordnet ist. Auf dem Sockel 134 ist ein Pumpengehäuse 135 angeordnet, in dem eine Kolbenstange 136 mit einem Kolbenstangenkopf 137 in der Pfanne des Lagerbalkens 127 höhenverstellbar gelagert ist.

An dem Pumpengehäuse 135 ist ein Kniehebel 149 vorgesehen, der aus einem oberen Hebel 150 und einem unteren Hebel 151 besteht, welche über ein Gelenk 152 gelenkig miteinander verbunden sind. An dem oberen Hebel 150 ist ein weiteres Gelenk 153 vorgesehen, das auf eine Stange 154 wirkt, über die die Hubpumpe betätigt werden kann.

Am oberen Ende der Stange 103 ist ein Handgriff 155 vorgesehen. Auch die Stange 103 weist eine Vielzahl von Öffnungen 156 zur Gewichtserleichterung auf.

Innerhalb des Lagerbalkens 127 ist der Kolbenstangenkopf 137 in einer passenden Lagerpfanne gelagert. In Höhe der Einschnürung 136a des Kolbenstangenkopfes 137 ist ein Schnäpper 158 horizontal beweglich vorgesehen. Der Schnäpper 158 ist in zwei Lagern 159 und 160 längsverschieblich gelagert und steht unter dem Druck einer Feder 161. Mit einem Handgriff 162 ist der Schnäpper 158 in und außer Eingriff mit der Einschnürung 136a zu bringen.

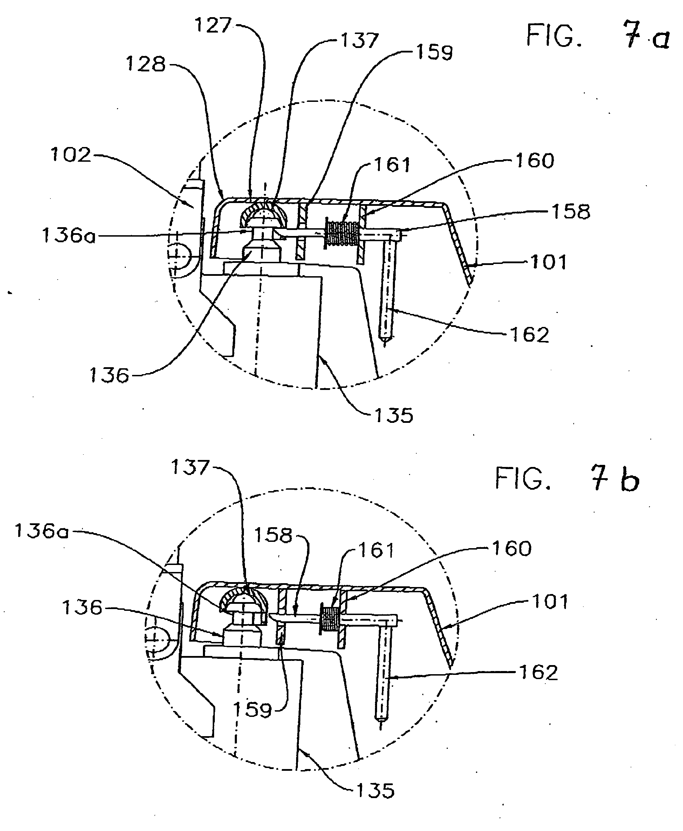

In Figur 7a ist der Schnäpper 158 in Schließstellung, in der er in die Einschnürung 136a der Kolbenstange 136 eingreift und dadurch eine drehbare aber feste Verbindung zwischen der Kolbenstange 136 und dem Lagerbalken 127 gewährleistet ist, mithin eine feste drehbare Verbindung zwischen dem Haltegestell 101 und der Hubeinrichtung 102.

In der Darstellung gemäß Figur 7b ist der Schnäpper 158 aus der Einschnürung 136a der Kolbenstange 136 zurückgezogen, so dass die Kolbenstange 136 und der Lagerbalken 127 voneinander getrennt werden können.

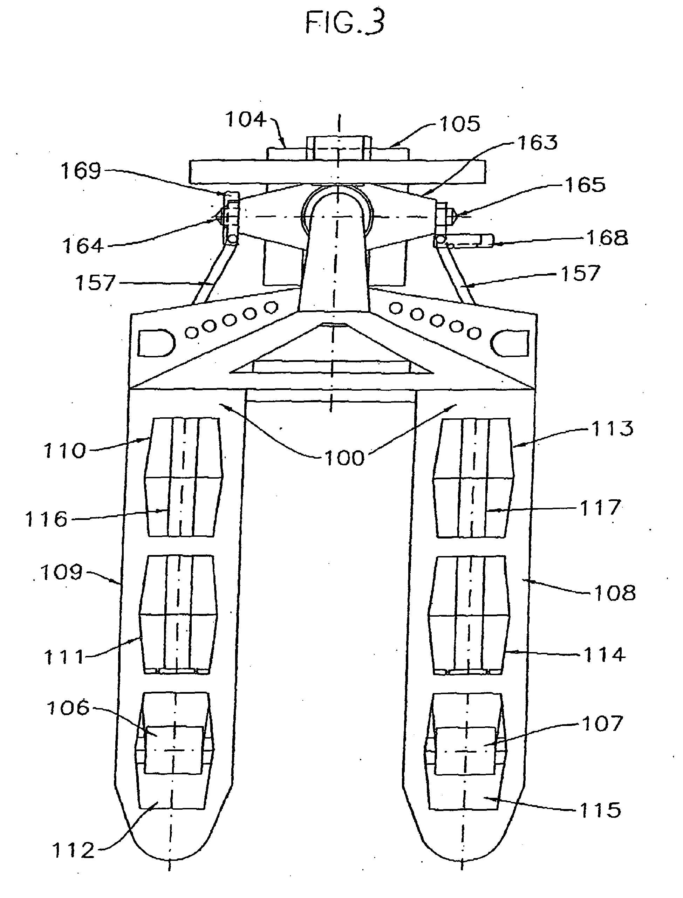

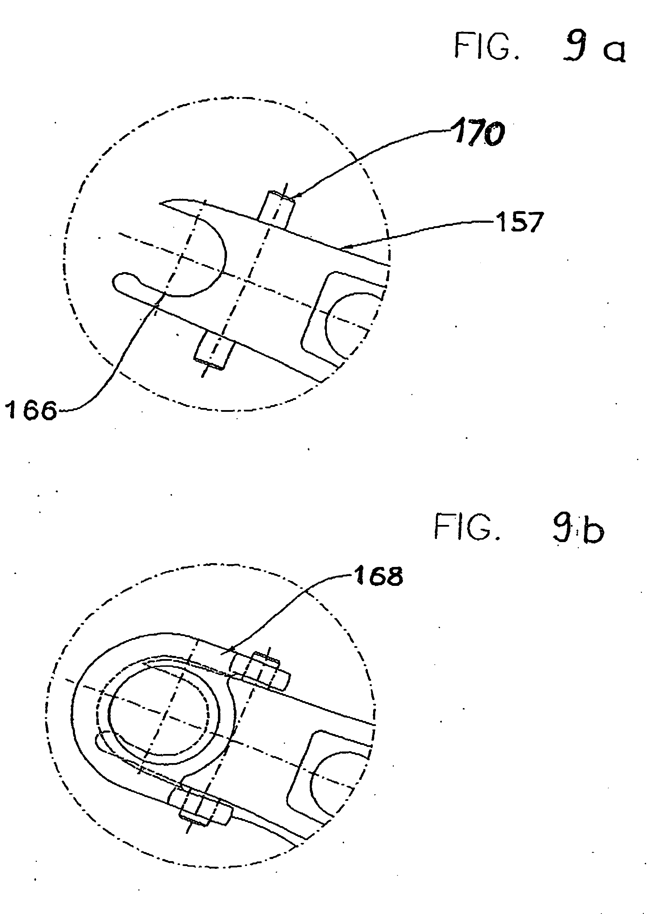

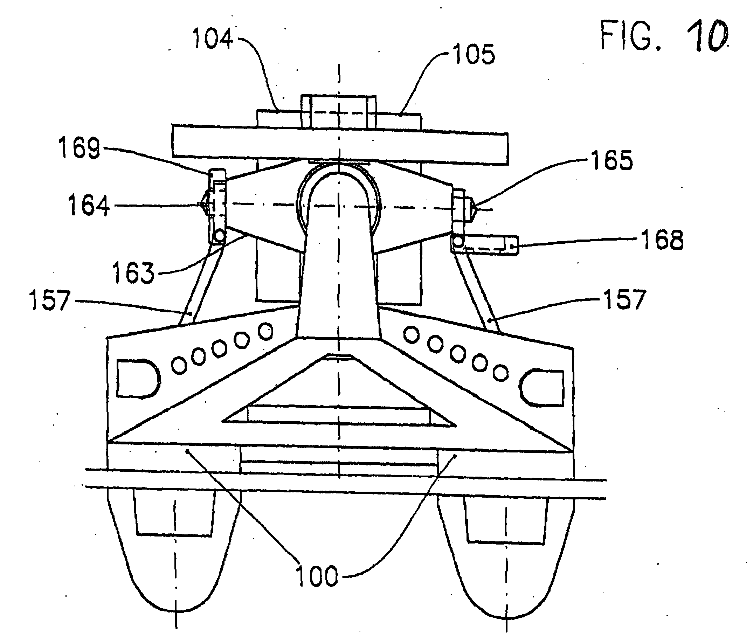

Wie sich aus den Figuren 3 und 10 ergibt, sind an beiden Seiten der Traverse 163 Aufnahmebolzen oder Aufnahmezapfen 164 und 165 vorgesehen. An den vorderen Enden des Kniehebels 157 ist, wie aus Figur 9a ersichtlich ist, eine nach vorn offene Lageröffnung 166 vorgesehen, die mittels eines Bügels 168, der an dem Kniehebel 157 schwenkbar angeordnet ist, zu verschließen und zu öffnen ist.

Dabei zeigt Figur 9a die Offenstellung und Figur 9b die Schließstellung.

Gemäß der Darstellung in den Figuren 3 und 10 ist der eine Bügel 168 in Offenstellung, während der gegenüberliegend angeordnete Bügel 169 in Schließstellung ist und den Aufnahmebolzen 164 umschließt.

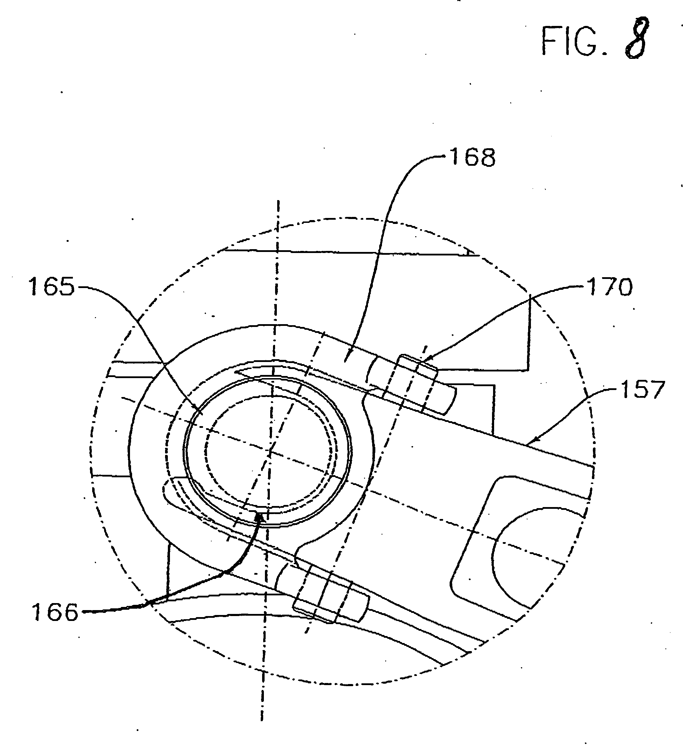

Figur 8 zeigt den Kniehebel 157, an dessen vorderem Ende der Bügel.168 auf der Achse 170 schwenkbeweglich angeordnet ist. Im dargestellten geschlossenen Zustand des Bügels 168 ist der Aufnahmebolzen 165 fest zwischen der Lageröffnung 166 des Kniehebels 157 und dem Bügel 168 angeordnet.

Im geschlossenen Zustand der Bügel 168 und 169 sind die Hubeinrichtung 102 und das Haltegestell 101 des Gabelhubwagens drehbeweglich, aber fest miteinander verbunden.

Im Offenzustand der Bügel 168 und 169 können der Kniehebel 157 und die Aufnahmebolzen 164, 165 voneinander getrennt werden. Das bedeutet, dass die Hubeinrichtung 102 und das Haltegestell 101 des Gabelhubwagens voneinander getrennt werden können.

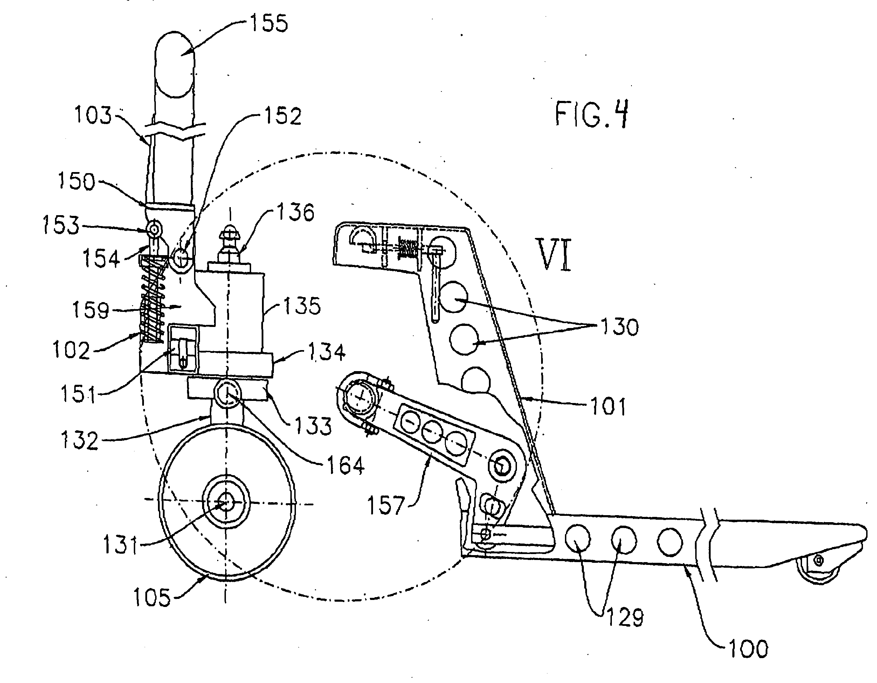

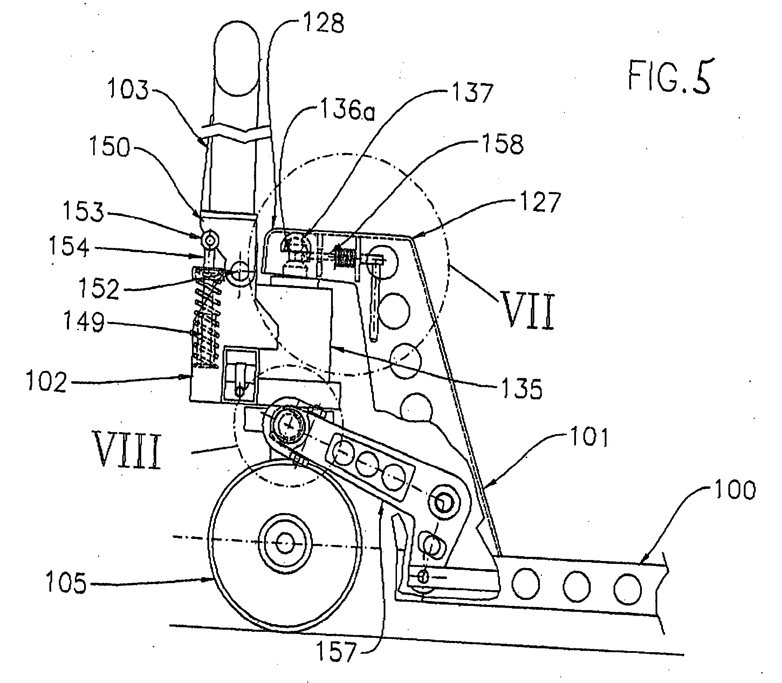

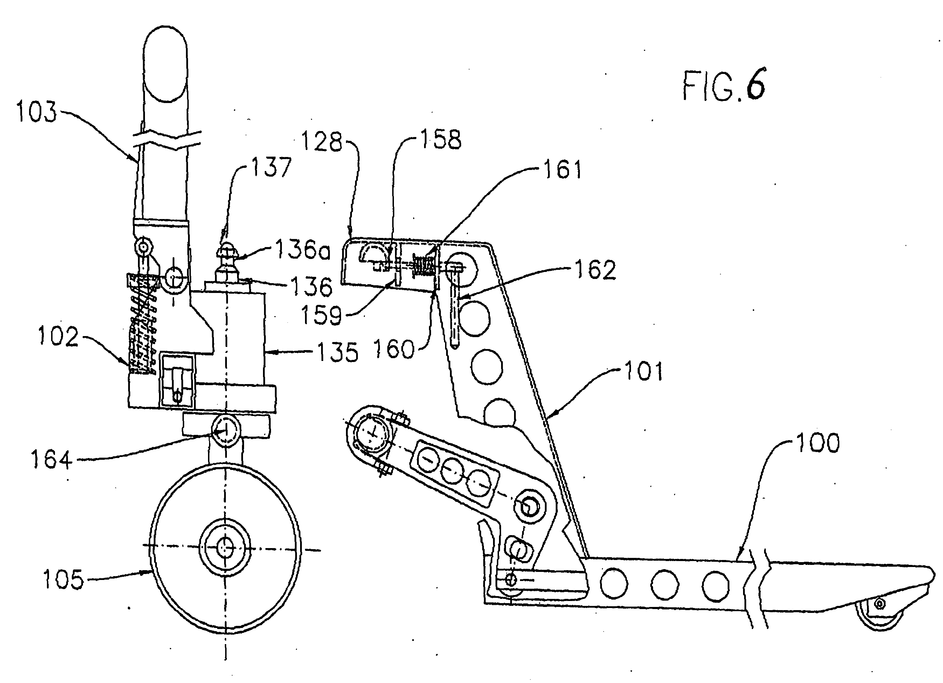

Wenn der in den Figuren 1 und 5 dargestellte Gabelhubwagen, bei dem die Hubeinrichtung 102 und das Haltegestell 101 im Bereich der Kolbenstange 136 und im Bereich der beiden Aufnahmebolzen 164 und 165 drehbar und fest miteinander verbunden sind, getrennt werden soll in die Hubeinrichtung 102 und das Haltegestell 101, wie sie in den Figuren 4 und 6 dargestellt sind, wird zunächst der Schnäpper 158 an dem Griff 162 außer Eingriff gebracht und der Balken 127 von der Kolbenstange 136 entfernt. Anschließend werden die beiden geschlossenen Bügel 168 und 169 geöffnet, so dass die Aufnahmebolzen 164 und 165 frei werden und der jeweilige Kniehebel 157 von den Aufnahmebolzen 164 und 165 entfernt werden kann. Damit sind die Hubeinrichtung 102 und das Haltegestell 101 des Gabelhubwagens voneinander getrennt und können auch unabhängig voneinander transportiert und von einer einzigen Person getragen werden.

Wenn die Trennung des Gabelhubwagens in die Hubeinrichtung 102 und das Haltegestell 101 wieder rückgängig gemacht werden soll, wird die Hubeinrichtung 102 zum Haltegestell 101 soweit gekippt, dass der Bolzenkopf 137 in die Lagerpfanne des Lagerbalkens 127 eintreten kann. Anschließend wird die Hubeinrichtung 102 wieder senkrecht gestellt, so dass die Lageröffnung 166 des jeweiligen Kniehebels 157 die Aufnahmebolzen 164 und 165 aufnimmt. Danach werden die beiden Bügel 168 und 169, die bis dahin offen gewesen sind, geschlossen, so dass dadurch der ursprüngliche Zustand des Gabelhubwagens wieder hergestellt ist, nämlich die Hubeinrichtung 102 und das Haltegestell 101 gelenkig und fest miteinander verbunden sind.

Die Hubeinrichtung oder die Hubpumpe umfasst eine Schubkolbenpumpe, deren Kolbenstange 136 in dem Pumpengehäuse 135 axial verschieblich gelagert ist und aus dem Pumpengehäuse 135 nach oben heraus ragt. Hierdurch kann das Trägergestell 100 mit dem erforderlichen Hub gehoben, und gesenkt werden. Die ringförmige Einschnürung 136a ist im oberen Teil der Kolbenstange 136 ausgebildet.

Der Gabelhubwagen weist einen Radsatz mit zwei Rädern 104, 105 und eine Achse 131 auf, wobei auf der Achse 131 eine Stütze drehbeweglich gelagert ist, die die Konsole 134 mit der Pumpe oder der Pumpeinrichtung trägt.

An der Konsole 134 kann eine Stange 103 zum Heben, Senken, Ziehen, Drücken und Lenken des Gabelhubwagens vorgesehen sein, die durch Schwenken in einer vertikalen Ebene die Pumpe oder die Pumpeinrichtung betätigt.

Zur Gewichtsreduzierung des Gabelhubwagens weisen die Tragbalken 108, 109, das Haltegestell 101 des Trägergestell 100 sowie die Stange 103 Öffnungen 110-115, 129, 130, 156, bzw. Aussparungen auf.

An den Tragbalken 108, 109 ist je ein Kniehebel 157 gelenkig gelagert, von denen jeder am vorderen Ende eine nach vorn offene Lageraufnahme 166 zur Aufnahme eines Aufnahmezapfens 164, 165 aufweist.

Der eine Teil des Gabelhubwagens besteht aus dem Handgriff 155, der Lenkstange 103 mit Pumpe, der Kolbenstange 136 und zwei, Rädern 104, 105, während der andere Teil des Gabelhubwagens aus dem Trägergestell 100, den Kniehebeln 157, zwei Zugstangen 116, 117 und zwei oder vier Rollen besteht.

### Sezugszeichenliste

- 100: Trägergestell
- 101: Haltegestell
- 102: Hubeinrichtung
- 103: Stange/Lenkstange
- 104: vorderes Rad
- 105: vorderes Rad
- 106: rückwärtige Rolle
- 107: rückwärtige Rolle
- 108: Tragbalken
- 109: Tragbalken
- 110: Öffnung
- 111: Öffnung
- 112: Öffnung
- 113: Öffnung
- 114: Öffnung
- 115: Öffnung
- 116: Hubstange/Zugstange
- 117: Hubstange/Zugstange
- 118: Verstellgetriebe
- 119: Führungsrolle
- 120: Führungsrolle
- 121: vorderes Ende
- 122: Querbalken
- 123: Ende des Querbalkens

- 124: Ende des Querbalkens
- 125: Balken
- 126: Balken
- 127: Lagerbalken
- 128: Ende
- 129: Öffnungen
- 130: Öffnungen
- 131: Achse
- 132: Stütze
- 133: Traverse
- 134: Konsole
- 135: Pumpengehäuse
- 136: Kolbenstange
- 137: Kolbenstangekopf
- 136a: Einschnürung
- 149: Kniehebel
- 150: oberer Hebel
- 1,51: unterer Hebel
- 152: Gelenk
- 153: Gelenk
- 154: Stange
- 155: Handgriff
- 156: Öffnungen
- 157: Kniehebel
- 158: Schnäpper
- 159: Lager
- 160: Lager
- 161: Feder
- 162: Handgriff
- 163: Traverse
- 164: Aufnahmezapfen
- 165: Aufnahmezapfen
- 166: Lager/Lageröffnung/ Lageraufnahme
- 167: Bügel
- 168: Bügel
- 169: Bügel
- 170: Schwenkachse/Achse

## Patentansprüche

1. Gabelhubwagen umfassend ein Trägergestell (100) mit zwei mit Abstand zueinander angeordneten Tragbalken (108, 109) und mit Führungsrollen (119, 120) und ein starr damit verbundenes Haltegestell (101) sowie eine damit drehbeweglich und lösbar verbundene, auf der Achse zweier Räder (104, 105) gelagerte Hubeinrichtung (102), wobei das Haltegestell (101) einen mit einer Gelenkpfanne auf einem Kopf (137) einer Kolbenstange (136) der Hubeinrichtung (102) lösbar gehaltenen Lagerbalken (127) aufweist und an den Tragbalken (108, 109) je ein Kniehebel (157) gelenkig gelagert ist, die an gegenüberliegenden Seiten einer Traverse (133, 163) oder Konsole (134) der Hubeinrichtung (102) drehbeweglich und lösbar befestigt sind, wobei die Hubeinrichtung (102) eine Hubpumpe aufweist, die auf einer Konsole (134) angeordnet ist und die die Kolbenstange (136) mit einer Einschnürung (136a) aufweist, deren Kopf (137) aus dem Gehäuse der Hubpumpe nach oben heraus ragt,
**dadurch gekennzeichnet,**
**dass** die zwei Kniehebel (157) jeweils am vorderen Ende eine nach vorn offene Lageraufnahme (166) zur Aufnahme eines Aufnahmezapfens (164, 165) oder -bolzens aufweisen und jeweils mit der an ihrem vorderen Ende die an der Konsole (134) oder Traverse (133, 163) angeordneten Aufnahmezapfen (164, 165) oder -bolzen aufnehmenden, nach vorne offenen Lageraufnahme (166) an der Hubeinrichtung (102) befestigt sind, wobei die Lageraufnahmen (166) jeweils mittels eines an dem jeweiligen Kniehebel (157) schwenkbar angeordneten und in der Schließstellung den Aufnahmezapfen (164, 165) oder -bolzen umschließenden Bügels (168, 169) derart öffenbar verschließbar sind, dass der jeweilige Aufnahmezapfen (164, 165) oder -bolzen fest zwischen der jeweiligen Lageraufnahme (166) und dem jeweiligen Bügel (168, 169) angeordnet ist, und dass ein in die Einschnürung (136a) der Kolbenstange (136) eingreifender, senkrecht zur Kolbenstange (136) wirkender federbelasteter Schnäpper (158) in dem Haltegestell (101) in Höhe des Kolbenstangenkopfes (137) angeordnet ist, der mit der Einschnürung (136a) des Kolbenstangenkopfes (137) in und außer Eingriff zu bringen ist.

2. Gabelhubwagen nach Anspruch 1, **dadurch gekennzeichnet, dass** der Schnäpper (158) horizontal beweglich in zwei an dem Lagerbalken (127) angeordneten Lagern (159, 160) längsverschieblich gelagert ist.

3. Gabelhubwagen nach Anspruch 1 oder 2, **dadurch gekennzeichnet, dass** der Schnäpper (158) gegen den Druck einer Feder (161) außer Eingriff mit der Einschnürung (136a) bringbar ist.

4. Gabelhubwagen nach einem der vorhergehenden Ansprüche, **dadurch gekennzeichnet, dass** die Aufnahmezapfen (164, 165) oder -bolzen je an einer Seite der Traverse (133, 163) oder der Konsole (134) quer zur Längsachse des Gabelhubwagens angeordnet sind.

5. Gabelhubwagen nach einem der vorhergehenden Ansprüche, **dadurch gekennzeichnet, dass** die Aufnahmezapfen (164, 165) oder -bolzen horizontal ausgerichtet sind.

6. Gabelhubwagen nach einem der vorhergehenden Ansprüche, **dadurch gekennzeichnet, dass** die Bügel (168, 169) im vorderen Bereich der Kniehebel (157) auf einer Achse (170) schwenkbeweglich angeordnet sind.

## Claims

1. Pallet truck comprising a carrier frame (100) having two bearers (108, 109) which are arranged with spacing from each other, and having guiding rollers (119, 120), and a retaining frame (101) which is rigidly connected thereto and a lifting device (102) which is connected thereto in a rotationally movable and releasable manner and which is supported on the axle of two wheels (104, 105), with the retaining frame (101) having a bearing beam (127) which is releasably retained with an articulation socket on a head (137) of a piston rod (136) of the lifting device (102) and a respective elbow lever (157) being supported so as to be articulated to the bearers (108, 109), which levers are secured so as to be rotationally movable and releasable at opposite sides of a cross-member (133, 163) or console (134) of the lifting device (102), with the lifting device (102) having a lifting pump which is arranged on a console (134) and which has the piston rod (136) which has a contraction (136a) and whose head (137) projects upwards out of the housing of the lifting pump,
**characterised in that**
the two elbow levers (157) each have, at the front end, a forwardly open bearing receiving member (166) for receiving a receiving pin (164, 165) or stud and are each secured to the lifting device (102) with the forwardly open bearing receiving member (166) which receives, at the front end thereof, the receiving pins (164, 165) or studs which are arranged on the console (134) or cross-member (133, 163), with the bearing receiving members (166) each being able to be closed in an openable manner by means of a curved member (168, 169) which is pivotably arranged on the respective elbow lever (157) and which surrounds the receiving pin (164, 165) or stud in the closure position in such a manner that the respective receiving pin (164, 165) or stud is arranged securely between the respective bearing receiving member (166) and the respective curved member (168, 169), and a resiliently loaded catch (158), which engages with the contraction (136a) of the piston rod (136) and which acts perpendicularly relative to the piston rod (136), is arranged in the retaining frame (101) at the level of the piston rod head (137) which is intended to be moved into and out of engagement with the contraction (136a) of the piston rod head (137).

2. Pallet truck according to claim 1, **characterised in that** the catch (158) is supported so as to be longitudinally displaceable in a horizontally movable manner in two bearings (159, 160) which are arranged on the bearing beam (127).

3. Pallet truck according to claim 1 or claim 2, **characterised in that** the catch (158) can be moved out of engagement with the contraction (136a) counter to the pressure of a spring (161).

4. Pallet truck according to any one of the preceding claims, **characterised in that** the receiving pins (164, 165) or studs are arranged one at each side of the cross-member (133, 163) or the console (134) transversely relative to the longitudinal axis of the pallet truck.

5. Pallet truck according to any one of the preceding claims, **characterised in that** the receiving pins (164, 165) or studs are orientated horizontally.

6. Pallet truck according to any one of the preceding claims, **characterised in that** the curved members (168, 169) are arranged in the front region of the elbow levers (157) so as to be pivotably movable on an axle (170).

## Revendications

1. Chariot élévateur à fourche comprenant un châssis-support (100) avec deux poutres porteuses (108, 109) aménagées à distance l'une de l'autre et avec des galets de guidage (119, 120) et un châssis de maintien (101) qui lui est lié de manière rigide, ainsi qu'un dispositif de levage (102) qui y est monté à rotation et raccordé de manière amovible sur l'axe de deux roues (104, 105), dans lequel le châssis de maintien (101) présente une poutre d'appui (127) maintenue de manière amovible avec un coussinet à rotule sur une tête (137) d'une tige de piston (136) du dispositif de levage (102) et des leviers à genouillère respectifs (157), qui sont fixés à rotation et de manière amovible sur les côtés opposés d'une traverse (133, 163) ou d'une console (134) du dispositif de levage (102), sont montés de manière articulée sur les poutres porteuses (108, 109), lequel dispositif de levage (102) présente une pompe aspirante-refoulante qui est aménagée sur une console (134) et présente la tige de piston (136) avec un étranglement (136a), dont la tête (137) dépasse du boîtier de la pompe aspirante-refoulante vers le haut,
**caractérisé en ce que**
les deux leviers à genouillère (157) présentent, respectivement, à l'extrémité avant, un logement de palier (166) ouvert vers l'avant et destiné à recevoir un tourillon (164, 165) ou un boulon de positionnement et sont respectivement fixés sur le dispositif de levage (102) avec le logement de palier (166) ouvert vers l'avant et recevant à son extrémité avant les tourillons (164, 165) ou les boulons de positionnement aménagés sur la console (134) ou la traverse (133, 163), lesquels logements de palier (166) peuvent évidemment se fermer respectivement au moyen d'un étrier (168, 169) aménagé à pivotement sur le levier à genouillère respectif (157) et entourant, en position de fermeture, les tourillons (164, 165) ou les boulons de positionnement de sorte que le tourillon (164, 165) ou le boulon de positionnement respectif soit aménagé de manière fixe entre le logement de palier respectif (166) et l'étrier respectif (168, 169) et qu'un verrou (158), sollicité par un ressort, s'engageant dans l'étranglement (136a) de la tige de piston (136) et agissant perpendiculairement à la tige de piston (136) soit aménagé dans le châssis de maintien (101) à hauteur de la tête de tige de piston (137), qui doit être amenée en prise ou hors prise avec l'étranglement (136a) de la tête de tige de piston (137).

2. Chariot élévateur à fourche selon la revendication 1, **caractérisé en ce que** le verrou (158) est monté de manière à pouvoir se déplacer longitudinalement et horizontalement dans deux paliers (159, 160) aménagés sur la poutre d'appui (127).

3. Chariot élévateur à fourche selon la revendication 1 ou 2, **caractérisé en ce que** le verrou (158) peut être amené hors prise avec l'étranglement (136a) à l'encontre de la pression d'un ressort (161).

4. Chariot élévateur à fourche selon l'une quelconque des revendications précédentes, **caractérisé en ce que** les tourillons (164, 165) ou les boulons de positionnement sont aménagés respectivement sur un côté de la traverse (133, 163) ou de la console (134) transversalement à l'axe longitudinal du chariot élévateur à fourche.

5. Chariot élévateur à fourche selon l'une quelconque des revendications précédentes, **caractérisé en ce que** les tourillons (164, 165) ou les boulons de positionnement sont orientés horizontalement.

6. Chariot élévateur à fourche selon l'une quelconque des revendications précédentes, **caractérisé en ce que** les étriers (168, 169) sont aménagés à pivotement dans la zone avant du levier à genouillère (157) sur un axe (170).
